# EUROPÄISCHE PATENTSCHRIFT

(11) **EP 3 234 634 B1**
(45) Veröffentlichungstag und Bekanntmachung des Hinweises auf die Patenterteilung: **16.10.2019**
(21) Anmeldenummer: 15813311.6
(22) Anmeldetag: 11.12.2015
(51) Int. Cl.: G01S 7/481

(54) **LASERSCANNER, UMLENKSPIEGELANORDNUNG HIERFÜR SOWIE OPTISCHES TRENNMITTEL FÜR EINE UMLENKSPIEGELANORDNUNG**
LASER SCANNER, DEFLECTION MIRROR ARRANGEMENT FOR THE LASER SCANNER, AND OPTICAL SEPARATING MEANS FOR A DEFLECTION MIRROR ARRANGEMENTT
SCANNEUR À LASER, AGENCEMENT DE MIROIRS DE DÉVIATION ASSOCIÉ ET MOYEN DE SÉPARATION OPTIQUE POUR UN AGENCEMENT DE MIROIRS DE DÉVIATION

(30) Priorität: 18.12.2014 DE 102014118974
(43) Veröffentlichungstag der Anmeldung: 25.10.2017
(73) Patentinhaber: Valeo Schalter und Sensoren GmbH, 74321 Bietigheim-Bissingen (DE)
(72) Erfinder: HARTMANN, Werner, 74321 Bietigheim-Bissingen (DE); POPESCU, Sorin, 74321 Bietigheim-Bissingen (DE); HORVATH, Peter, 74321 Bietigheim-Bissingen (DE)
(74) Vertreter: Withopf, Kristina
(86) Internationale Anmeldenummer: PCT/EP2015/079335
(87) Internationale Veröffentlichungsnummer: WO 2016/096624

(56) Entgegenhaltungen:
- WO-A1-2014/097858
- DE-A1-102010 041 937
- DE-B- 1 264 797
- US-A1- 2001 035 946
- US-B1- 6 486 474

## Beschreibung

Die Erfindung betrifft ein optisches Trennmittel mit einer Trennwand für eine Umlenkspiegelanordnung eines Laserscanners gemäß Anspruch 1.

Die Erfindung betrifft außerdem eine Umlenkspiegelanordnung für einen Laserscanner gemäß Anspruch 6. Die Erfindung betrifft ferner gemäß Anspruch 8 einen Laserscanner mit einer Umlenkspiegelanordnung sowie einem solchen optischen Trennmittel.

Im Automobilbereich werden zunehmend unterschiedlichste Fahrassistenzsysteme eingesetzt, das heißt elektronische Zusatzeinrichtungen zur Unterstützung des Fahrers in bestimmten Fahrsituationen. Viele Fahrerassistenzsysteme berücksichtigen dabei Informationen über Objekte im Umfeld des Kraftfahrzeugs, welche von optoelektronischen Detektionseinrichtungen bereit gestellt werden. Oft werden Laserscanner als optoelektronische Detektionseinrichtungen eingesetzt, welche nach dem Lichtlaufzeitverfahren arbeiten und daher einen Laser zum Aussenden von Laserimpulsen in die Umgebung des Laserscanners sowie einen oder mehrere optoelektronische Empfänger für reflektierte Strahlen aufweisen. Derartige Laser-basierte Systeme sind unter der Bezeichnung "LIDAR" ("Light detection and ranging") bekannt.

Bei einem Laserscanner werden die ausgesendeten Laserpulse über eine schwenkbare Spiegelanordnung so umgelenkt, dass eine Abtastung des Sichtfelds des Laserscanners innerhalb eines bestimmten Abtastwinkelbereichs stattfindet. Die Umlenkspiegelanordnung weist dabei einen um eine Drehachse rotierend antreibbaren Spiegelträger auf, welcher wenigstens einen Umlenkspiegel trägt. Pro Abtastwinkel wird dabei ein Laserimpuls ausgesendet, wodurch das Sichtfeld gescannt wird. Im selben Winkelschritt werden die reflektierten Strahlen mittels des optischen Empfängers des Laserscanners empfangen. Der optische Empfänger weist dabei wenigstens einen Detektor auf, beispielsweise eine Fotodiode, welche bei Empfang eines reflektierten Strahls ein elektrisches Signal erzeugen. Erkennt eine Auswertungseinrichtung in dem Empfangssignal eines optoelektronischen Detektors ein Echo, so ist dieses grundsätzlich auf Reflektionen an einem Zielobjekt in der Umgebung zurückzuführen. Die Laufzeit zwischen dem Aussenden und dem Empfangen des Echos ist proportional zur Distanz zum Objekt. Aus der Laufzeitmessung wird die Entfernung für den jeweiligen Winkelschritt des Laserscanners ermittelt.

DE 10 2005 055 572 B4 offenbart einen abtastenden optischen Entfernungssensor mit einem Laser als optischen Sender und wenigstens einem Detektor als optischen Empfänger und einer Umlenkeinheit. Die Umlenkeinheit umfasst einen ersten, dem optischen Sender zugeordneten Spiegel, welcher die Laserpulse auf die zu vermessende Szene umlenkt. Dem Empfänger ist ein zweiter Spiegel zugeordnet, welcher die von Objekten zurück gestreuten Laserimpulse auf den mindestens einen Detektor umlenkt. Der erste und der zweite Spiegel sind auf einer gemeinsamen drehbaren Achse angeordnet und lassen durch ihre Anordnung einen anwendungsspezifischen Abstand der optischen Achsen des Senders und des Empfängers zu. Der mindestens eine Laser und der mindestens eine Detektor sind mit ihrer gesamten Elektronik stehend angeordnet, wodurch der erste Spiegel, welcher dem Sender zugeordnet ist, und der zweite Spiegel, welcher dem Empfänger zugeordnet ist, entsprechend der stehenden Anordnung von Sender und Empfänger über einander liegen.

DE 12 64 797 beschreibt ein Entfernungsmessgerät mit einem teleskopisch ausziehbaren optischen System. Das optische System wird durch eine lichtundurchlässige Trennwand in einen Teil für den ausgesendeten Lichtstrahl und den reflektierten Lichtstrahl unterteilt.

DE 10 2010 041937 weist ein elastisch verformbares Dichtungselement auf, das direkt auf einer Sensorelementoberfläche aufliegt.

US 6 486 474 offenbart ein Infrarot-Spektrometer. Das Spektrometer weist ein Gehäuse auf, in das durch ein Eingangsfenster Infrarot-Strahlung eindringen kann. Die Strahlung wird über eine erste Fläche eines prismatischen Spiegels umgelenkt. Die Strahlung wird anschließend über zwei Spiegel mehrfach reflektiert, bis die Strahlung über eine zweite Fläche des prismatischen Spiegels auf ein Ausgangsfenster des Spektrometers umgelenkt wird. Damit die Strahlung nicht direkt durch das Eingangsfenster und das Ausgangsfenster das Spektrometer verlassen kann, weist der prismatische Spiegel ein Schild auf, das Strahlung blockiert, die direkt von dem Eingangsfenster auf das Ausgangsfenster gerichtet ist

Zur Vermeidung eines optischen Kurzschlusses zwischen dem optischen Sender und dem Empfänger eines Laserscanners mit einer Umlenkspiegelanordnung sind optische Trennmittel für die Umlenkspiegelanordnung bekannt, welche eine im Wesentlichen starre Trennwand zur Trennung eines Empfangsspiegelbereichs eines Umlenkspiegels von einem Sendespiegelbereich aufweisen. Die Trennwand liegt in Einbaulage des Trennmittels im Wesentlichen senkrecht zur Drehachse des Spiegelträgers und übergreift mit einem geradlinigen Kantenabschnitt den Umlenkspiegel. Das Trennmittel ist an dem Spiegelträger befestigt. Über Befestigungsstege, welche beiderseits des geradlinigen Kantenabschnitts der Trennwand angeordnet sind. Das Trennmittel wird üblicherweise an dem Spiegelträger verschraubt, so dass die Trennwand fixiert ist und den Empfangsspiegelbereich vom Sendespiegelbereich optisch trennt. Dadurch ist ein Einfluss unerwünschten Streulichts auf den optischen Empfänger ausgeschlossen.

Es ist ein bei Serienfertigung bekannte Erscheinung, dass verschiedenen Bauteile einer Serie mehr oder weniger von einem Normmaß abweichen. Die Serienfertigung wird dabei oft durch Fertigungstoleranzen der beteiligten Bauteile gefördert. Bei der serienmäßigen Fertigung von Laserscannern kann es aber auch bei Fertigung innerhalb von Toleranzbereichen zur Bildung eines Spalts zwischen dem Umlenkspiegel und der Innenkante des Trennmittels kommen. Durch den Spalt können Verschmutzungen zwischen den eigentlich zu trennenden Spiegelbereichen übertreten. Insbesondere ist jedoch möglich, dass Streulicht in den Empfangsspiegelbereich eindringt und dadurch Fehlfunktionen des Laserscanners auslöst. Außerdem können Trennmittel, welche mit Größtmaß der zulässigen Toleranzen gefertigt sind, nur mit hohen Anpresskräften an den Spiegelträger montiert werden, wodurch es zu einer Verzerrung des Spiegels und damit im Betrieb des Laserscanners zu einer Verfälschung der Umleitung des Lichtstrahls kommt.

Der vorliegenden Erfindung liegt die Aufgabe zugrunde, eine fehlerfreie Serienfertigung einer Umlenkspiegelanordnung für einen Laserscanner zu ermöglichen.

Diese Aufgabe wird erfindungsgemäß durch ein optisches Trennmittel mit den Merkmalen des Anspruchs 1 gelöst. Die Aufgabe wird außerdem gemäß Anspruch 6 durch eine Umlenkspiegelanordnung mit einem derartigen Trennmittel gelöst. Ferner wird die Aufgabe gemäß Anspruch 8 durch einen Laserscanner mit einer solchen Umlenkspiegelanordnung und einem solchen optischen Trennmittel gelöst.

Erfindungsgemäß ist längs der innen, das heißt dem Umlenkspiegel zugewandt, liegenden Kantenabschnitts der Trennwand ein elastisch verformbares Dichtungselement angeordnet. Das Dichtungselement schließt einen Spalt zwischen der Kante der Trennwand und der Oberfläche des Umlenkspiegels unabhängig von den Fertigungstoleranzen der gefügten Bauteile dichtend ab. Die fertigungsbedingten Maßunterschiede der Trennmittel-Bauteile werden durch Verformung des Dichtungselements bei der Montage des Laserscanners ausgeglichen. In dem elastisch verformbaren Material des Dichtungselements entstehen bei der Montage des Trennmittels und Andrücken des Trennmittels an den Spiegelträger Rückstellkräfte entsprechend der beim Fügen des Trennmittels aufgebrachten Anpresskraft. Die Rückstellkräfte gewährleisten einen dichten Abschluss. Das Dichtungselement besteht aus einem intransparenten Material, so dass ein Durchtritt von Streulicht ausgeschlossen ist.

Das Dichtungselement ist in einem Ausführungsbeispiel ein längs der innen liegenden Kante aufgetragener Montageschaum, beispielsweise ein Polyurethan-Schaum. Die Schaumraupe wird vorzugsweise nach der Montage des Trennmittels über die Befestigungsstege auf den Spalt zwischen der Trennwand und dem Umlenkspiegel als durchgängige Schaumraupe aufgetragen.

Das Trennmittel wird vorzugsweise mit einem Untermaß im Bereich des Kantenabschnitts der Trennwand ausgebildet, das heißt derart dimensioniert, dass unter Berücksichtigung der Länge der Befestigungsstege und deren Befestigungsmitteln in Einbaulage des Trennmittels ein beabsichtigter Spalt zwischen der Oberfläche des Umlenkspiegels und dem geradlinigen Kantenabschnitt der Trennwand ergibt, welche den Umlenkspiegel übergreift. Auf diese Weise ist eine Verzerrung des Umlenkspiegels durch die Trennwand ausgeschlossen, wobei das Dichtelement den beabsichtigten Spalt verschließt.

In einem bevorzugten Ausführungsbeispiel der Erfindung ist das elastisch verformbare Dichtungselement als Lippendichtung ausgebildet, welche eine bei der Montage des Trennmittels elastisch abwinkelbare Abdecklippe aufweist. Der Querschnitt der Lippendichtung weißt einen an der Trennwand beziehungsweise dem zur Opposition mit dem Umlenkspiegel vorgesehenen Kantenabschnitt befestigten Befestigungsabschnitt und die Abdecklippe auf, welche aus dem Befestigungsabschnitt hervorsteht. Die Abdecklippe weist entsprechend dem an sich bekannten Prinzip einer Lippendichtung einen gegenüber dem Befestigungsabschnitt dünnen Querschnitt auf, wodurch die Abdecklippe bei der Montage elastisch abwinkelbar ist. Das Trennmittel wird bei seiner Montage zunächst in einer parallel zur Ebene des Umlenkspiegels liegenden Richtung positioniert und in der vorgesehenen Höhe an den Umlenkspiegel angedrückt, bis die Befestigungsstege in Überdeckung mit einer Befestigungsaufnahme an dem Spiegelträger liegen. Dabei wird die Abdecklippe abgewinkelt und aufgrund der elastischen Rückstellkräfte der abwinkelbaren Abdecklippe wird der Spalt zwischen der Trennwand und dem Umlenkspiegel über die gesamte Länge mechanisch und optisch abgedichtet.

Die Lippendichtung besteht vorteilhaft aus einem Elastomer, welches dauerhaft an dem Trennmittel angebracht ist und die zum Zweck der Abdichtung des Spalts zwischen Trennwand und Umlenkspiegel gewünschten Rückstellkräfte aufbringt.

In einer vorteilhaften Ausführungsform der Erfindung ist die Lippendichtung beziehungsweise das die Lippendichtung bildende Material an die Trennwand beziehungsweise deren geradlinigen Kantenabschnitt angespritzt.

Eine kostengünstige Herstellung des erfindungsgemäßen Trennmittels für eine Umlenkspiegelanordnung ist gegeben, wenn die Lippendichtung mit der Trennwand, beziehungsweise dessen innen liegenden Kantenabschnitt verklebt ist.

In einer bevorzugten Ausführungsform der Erfindung ist die Lippendichtung formschlüssig mit der Trennwand verbunden, so dass ein dauerhafter Halt der Lippendichtung an der Trennwand gegeben ist und ein Ablösen der Lippendichtung ausgeschlossen ist.

Eine besonders vorteilhafte Ausführungsform einer Umlenkspiegelanordnung für einen Laserscanner umfasst zwei Umlenkspiegel, welche radial von der Drehachse beabstandet auf gegenüber liegenden Seiten des Spiegelträgers angeordnet sind. Auf diese Weise ist ein Scannen des Sichtfelds mit doppelter Scangeschwindigkeit bei gleicher Drehzahl der Umlenkspiegelanordnung gegeben. Insbesondere kann in der Oppositionslage zweier Umlenkspiegel eine einfache Montage der jeweiligen Trennmittel erfolgen. Die Trennmittel beider Umlenkspiegel liegen auf gleicher Höhe, wobei auch die jeweiligen Befestigungsstege der Trennmittel auf gleicher Höhe liegen und auf einfache Weise an dem Spiegelträger befestigt werden können. Dabei ist eine Befestigung beider Trennmittel an einer gemeinsamen Aufnahme, beispielsweise einer Schraubenaufnahme möglich, wobei die freien Enden der Befestigungsstege benachbart liegen.

Dies erfindungsgemäße Trennmittel für eine Umlenkspiegelanordnung und die mit dem Trennmittel ausgestattet Umlenkspiegelanordnung gewährleisten eine Serienfertigung von Laserscannern ohne Ausschuss und damit einem kostengünstige Herstellung des Laserscanners.

Ausführungsbeispiele der Erfindung sind nachstehend anhand der Zeichnung näher erläutert. Es zeigen:
- Fig. 1:: eine perspektivische Ansicht eines Ausführungsbeispiels einer Umlenkspiegelanordnung,
- Fig. 2:: eine geschnittene Ansicht der Umlenkspiegelanordnung gemäß Fig. 1,
- Fig. 3:: eine Draufsicht auf ein Kraftfahrzeug mit einem Laserscanner,
- Fig. 4: eine perspektivische Ansicht eines Laserscanners mit einer Umlenkspiegelanordnung.

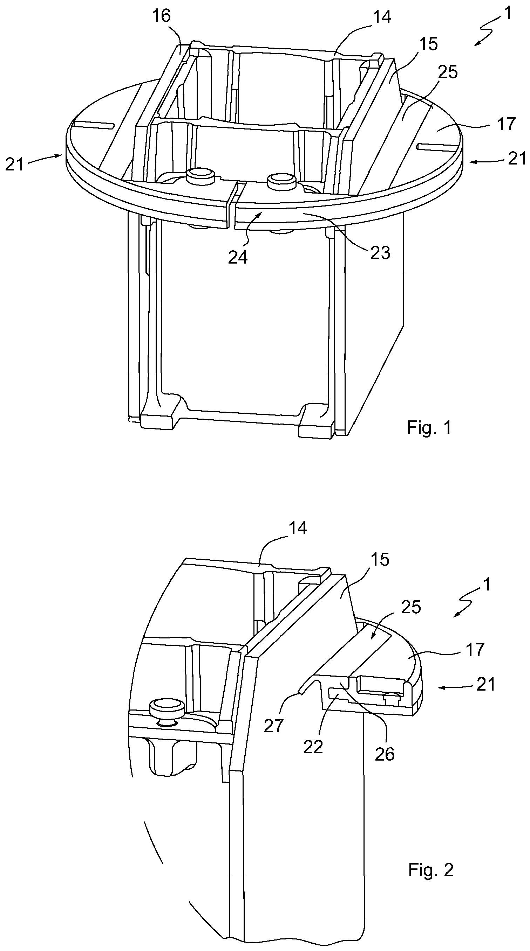

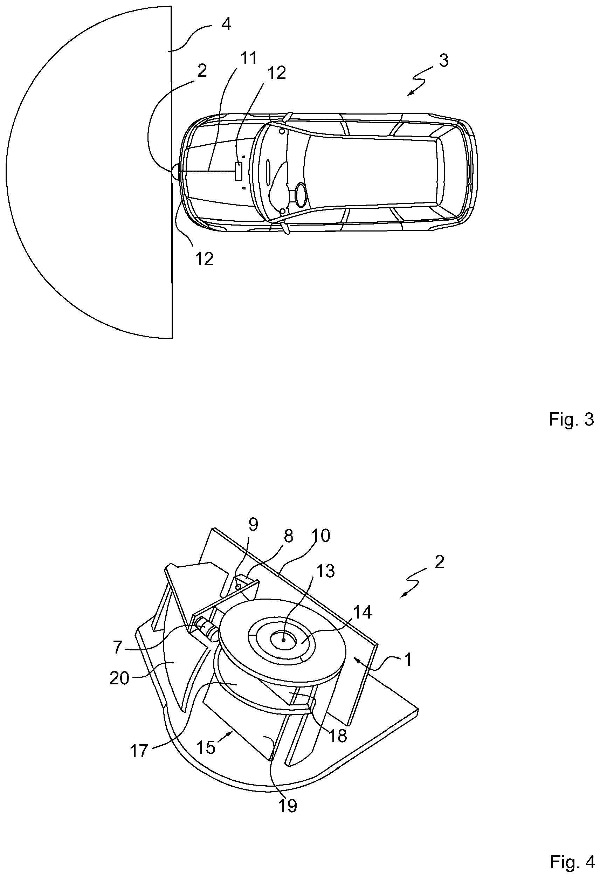

Fig. 1 und Fig. 2 zeigen perspektivische Ansichten eines Ausführungsbeispiels einer Umlenkspiegelanordnung 1 für einen Laserscanner 2 (Fig. 4). Der Laserscanner 2 dient der Detektion von Objekten im Umfeld eines Fahrzeugs 3 (Fig. 3). In dem in Fig. 3 gezeigten Ausführungsbeispiel ist der Laserscanner 2 im Frontbereich des Kraftfahrzeugs 3 angeordnet und erfasst daher ein Sichtfeld 4 vor dem Kraftfahrzeug 3. Der Laserscanner 2 ist im Frontbereich des Kraftfahrzeugs 3 angeordnet, beispielsweise hinter reinem Kühlergrill oder am Stoßfänger 5. In weiteren, nicht gezeigten Ausführungsbeispielen ist der Laserscanner 2 im Seitenbereich des Kraftfahrzeugs 3 angeordnet und erfasst mit seinem Sichtfeld 4 Objekte neben dem Kraftfahrzeug 3. Der Laserscanner 2 kann in einem weiteren Ausführungsbeispiel im Heckbereich des Kraftfahrzeugs angeordnet sein.

Der Laserscanner 2 weist in einem Gehäuse 6 einen optischen Sender 7, nämlich einen Laser, zum Aussenden von Laserimpulsen auf. Ein optischer Empfänger 8 empfängt Reflektionen an Objekten im Sichtfeld und weißt eine oder mehrere optoelektronische Detektoren 9 auf. Der Empfänger 8 mit seinen Detektoren 9 ist in einem integrierten Schaltkreis 10 angeordnet. Die optoelektronischen Detektoren erzeugen bei Empfang von Lichtstrahlen ein entsprechendes elektrisches Empfangssignal 11, welches einer Auswertungselektronik 12 bereitgestellt wird.

Der Laserscanner 2 umfasst eine Umlenkspiegelanordnung 1, welche einen um eine Drehachse 13 rotierend antreibbaren Spiegelträger 14 umfasst. Der Spiegelträger 14 trägt zwei Umlenkspiegel 15, 16, welche mit dem Spiegelträger 14 um die Drehachse 13 drehbar sind. Die Umlenkspiegel 15, 16 liegen parallel zueinander auf gegenüberliegenden Seiten des Spiegelträgers 14 und sind dabei jeweils radial von der Drehachse 13 beabstandet. Die Drehachse 13 liegt dabei parallel zu den Ebenen der Umlenkspiegel 15, 16.

Jedem Umlenkspiegel 16 ist eine Trennwand 17 zugeordnet, welche sich im Wesentlichen radial zur Drehachse 13 erstreckt und den jeweiligen Umlenkspiegel 15, 16 in einen Sendespiegelbereich 18 und einen Empfangsspiegelbereich 19 teilt. Mittels eines nicht dargestellten Schrittmotors wird die Umlenkspiegelanordnung 1 angetrieben, wobei der optische Sender 7 in jedem Winkelschritt der Umlenkspiegelanordnung 1 einen Laserimpuls abgibt, welcher durch den Sendespiegelbereich 18 in eine bestimmte Richtung im Sichtfeld 4 abgegeben wird. Auf diese Weise wird schrittweise das Sichtfeld 4 (Fig. 3) gescannt. An Objekten reflektierte Empfangsstrahlen werden durch den Empfangsspiegelbereich 19 über eine Empfangsoptik 20 zum Empfänger 18 umgelenkt.

Der Sendespiegelbereich 18 ist bezogen auf die Achsrichtung der Drehachse 13 auf Höhe des optischen Senders 7 angeordnet. Der Empfangsspiegelbereich 19 ist auf Höhe des Detektors 8 angeordnet. Der optische Sender 7 und der Empfänger 8 sind somit relativ zur Drehachse 13 der Umlenkspiegelanordnung 1 übereinander angeordnet, so dass über den Sendespiegelbereich 18 ausschließlich Sendestrahlen abgegeben werden und über den Empfangsspiegelbereich 19 ausschließlich reflektierte Strahlen zum Empfänger 8 umgelenkt werden. Der Laserscanner 2 arbeitet nach dem Lichtlaufzeitprinzip, wobei die Zeit bis zum Empfang eines Lichtstrahls gemessen wird und bei vorliegen von Echos im Empfangssignal Rückschlüsse auf die Position eines Objekts im Sichtfeld 4 gezogen werden.

Die radiale Trennwand 17 ist Bestandteil eines Trennmittels 21, welches ein separates Bauteil ist und nachstehend anhand der Fig. 1 und Fig. 2 näher erläutert ist. Die Umlenkspiegelanordnung 1 weißt entsprechend den bereits zu Fig. 4 erläuterten Aufbau einen Spiegelträger 14 auf, an dem radial beabstandet zur Drehachse zwei Umlenkspiegel 15, 16 auf gegenüberliegenden Seiten des Spiegelträgers 14 angeordnet sind. Die Trennwand 17 ist Bestandteil des Trennmittels 21, welches bevorzugt ein Stanzteil ist. Das Trennmittel 21 weist eine innen liegende Kante auf, welche einen geradlinigen Kantenabschnitt 22 umfasst, der in der gezeigten Einbaulage des Trennmittels 21 den jeweiligen Umlenkspiegel 15 übergreift. Beidseitig des Kantenabschnitts 22 sind Befestigungsstege 23 an dem Trennmittel 21 ausgebildet, welche über den Kantenabschnitt 22 hinausragen und an ihren freien Enden 24 an den Spiegelträger befestigt sind. In dem gezeigten Ausführungsbeispiel wird das Trennmittel 21 an dem Spiegelträger 14 verschraubt.

Der Kantenabschnitt 22 liegt in einem derartigen Abstand zu den freien Enden 24 der Befestigungsstege 23, beziehungsweise zur Lage der in den Befestigungsstegen 23 ausgesparten Befestigungsbohrungen 25, dass der Kantenabschnitt 22 in Einbaulage des Trennmittels 21 nahe der Oberfläche des Umlenkspiegels 15, 16 verläuft. Bei der Fertigung des Trennmittels sind die Fertigungstoleranzen so bestimmt, dass ein schmaler Spalt zwischen dem Kantenabschnitt 22 und der Oberfläche des jeweiligen Umlenkspiegels 15, 16 verbleibt. Auf diese Weise ist verhindert, dass bei der Montage des Trennmittels 21 an der Umlenkspiegelanordnung 1 der Umlenkspiegel 15, 16 mit zu hohen Anpresskräften verzerrt ist.

Entlang des Kantenabschnitts 22 ist ein elastisch verformbares Dichtungselement angeordnet, welches den Spalt zwischen dem Trennmittel 21 und dem Umlenkspiegel 15, 16 über die gesamte Breite des Umlenkspiegels 15, 16 mechanisch und optisch verschließt. Das Dichtungselement ist als Lippendichtung 25 ausgebildet. Die Lippendichtung 25 weist einen Querschnitt mit einem an der Trennwand 17 befestigten Befestigungsabschnitt 26 und einer aus dem Befestigungsabschnitt 26 hervorstehenden abwinkelbaren Abdecklippe 27 auf. Die Abdecklippe 27 ist dabei schmal ausgebildet, das heißt mit geringer Breite im Verhältnis zur Länge bis zum abwinkelbaren Ende, und somit bei einer Relativbewegung in der Ebene des Umlenkspiegels 15, 16 elastisch abwinkelbar. Die Abdecklippe 27 besteht vorzugsweise aus einem Elastomer. Die Abdecklippe 27 kann dabei an einem starren Befestigungsabschnitt 26 gehalten sein. In einem weiteren Ausführungsbeispiel ist die gesamte Lippendichtung 25 mit dem Befestigungsabschnitt 26 und der Abdecklippe 27 einteilig aus einem elastisch verformbaren Material gefertigt. Die Lippendichtung 25 ist in einem vorteilhaften Ausführungsbeispiel an die Trennwand 17 beziehungsweise den an der Trennwand 17 ausgebildeten geradlinigen Kantenabschnitt 22 über die gesamte Länge des Kantenabschnitts 22 angespritzt. Alternativ ist die Lippendichtung 25 mit der Trennwand 17 verklebt.

Im Ausführungsbeispiel gemäß Fig. 2 ist die Lippendichtung 25 formschlüssig mit der Trennwand 17 verbunden.

Die Umlenkspiegel 15, 16 sind im gezeigten Ausführungsbeispiel durchgehende Spiegelteile, deren Fläche durch das Trennmittel 21 in einen Empfangsspiegelbereich 19 und einen Sendespiegelbereich 18 unterteilt sind. In einem weiteren, nicht gezeigten Ausführungsbeispiel besteht der Umlenkspiegel 15, 16 aus zwei separaten Spiegelteilen, welche übereinander an dem Spiegelträger 14 befestigt sind und durch das Trennmittel 21 getrennt liegen. Anders ausgedrückt deckt das Trennmittel 21 einen Spalt zwischen den beiden Spiegelflächen eines Umlenkspiegels 15, 16 ab.

## Patentansprüche

1. Optisches Trennmittel (21) für eine Umlenkspiegelanordnung (1) eines Laserscanners (2) mit einer im Wesentlichen starren Trennwand zur Trennung eines Empfangsspiegelbereichs (19) eines Umlenkspiegels (15, 16) von einem Sendespiegelbereich (18), wobei die Trennwand (17) einen geradlinigen Kantenabschnitt (22) und das Trennmittel (21) beidseitig des Kantenabschnitts (22) angeordnete Befestigungsstege (23) aufweist,
**dadurch gekennzeichnet, dass**
längs des Kantenabschnitts (22) ein elastisch verformbares Dichtungselement (25) angeordnet ist, wobei das Trennmittel so ausgebildet ist, dass es über das elastisch verformbare Dichtungselement an dem Umlenkspiegel anliegt.

2. Trennmittel nach Anspruch 1,
**dadurch gekennzeichnet, dass**
das Dichtungselement als Lippendichtung (25) ausgebildet ist und einen Querschnitt mit einem an der Trennwand (17) befestigten Befestigungsabschnitt (26) und einer aus dem Befestigungsabschnitt (26) hervorstehenden elastisch abwinkelbaren Abdecklippe (27) aufweist.

3. Trennmittel nach Anspruch 2,
**dadurch gekennzeichnet, dass**
die Lippendichtung (25) an den Kantenabschnitt (22) der Trennwand (17) angespritzt ist.

4. Trennmittel nach Anspruch 2 oder 3,
**dadurch gekennzeichnet, dass**
die Lippendichtung (25) mit dem geradlinigen Kantenabschnitt (22) der Trennwand (17) verklebt ist.

5. Trennmittel nach einem der Ansprüche 2 bis 4,
**dadurch gekennzeichnet, dass**
die Lippendichtung (25) formschlüssig mit der Trennwand (17) verbunden ist.

6. Umlenkspiegelanordnung (1) für einen Laserscanner (2) mit einem um eine Drehachse (13) rotierend antreibbaren Spiegelträger (14), welcher wenigstens einen Umlenkspiegel (15, 16) trägt, und mit einem am Spiegelträger (14) gehaltenen Trennmittel (21) mit einer im Wesentlichen starren Trennwand (17), welche Senkrecht zur Drehachse (13) liegt und den Umlenkspiegel (15, 16) mit einem geradlinigen Kantenabschnitt (22) übergreift und einen Empfangsspiegelbereich (19) von einem Sendespiegelbereich (18) trennt, wobei das Trennmittel (21) an dem Spiegelträger (14) befestigt ist,
**dadurch gekennzeichnet, dass**
das Trennmittel (21) über ein elastisch verformbares Dichtungselement (25) an dem Umlenkspiegel (15, 16) anliegt, welches entlang des geradlinigen Kantenabschnitts (22) an der Trennwand (17) angeordnet ist.

7. Umlenkspiegelanordnung nach Anspruch 6,
**dadurch gekennzeichnet, dass**
die Umlenkspiegelanordnung (1) zwei Umlenkspiegel (15, 16) umfasst, welche radial von der Drehachse (13) beabstandet auf gegenüberliegenden Seiten des Spiegelträgers (14) angeordnet sind.

8. Laserscanner mit einer Umlenkspiegelanordnung (1) nach Anspruch 6 oder 7 und einem Trennmittel (21) hierfür nach einem der Ansprüche 1 bis 5.

## Claims

1. Optical separating means (21) for a deflection mirror arrangement (1) of a laser scanner (2), comprising a substantially rigid separating wall for separating a receiving mirror region (19) of a deflection mirror (15, 16) from a transmitting mirror region (18), wherein the separating wall (17) has a rectilinear edge section (22) and the separating means (21) has fastening webs (23) which are arranged on both sides of the edge section (22),
**characterized in that**
an elastically deformable seal element (25) is arranged along the edge section (22), wherein the separating means is formed in such a manner that it bears against the deflection mirror by means of the elastically deformable seal element.

2. Separating means according to Claim 1,
**characterized in that**
the seal element is in the form of a lip seal (25) and has a cross section with a fastening section (26), which is fastened to the separating wall (17), and a covering lip (27) which projects out of the fastening section (26) and which can be elastically angled.

3. Separating means according to Claim 2,
**characterized in that**
the lip seal (25) is injection-moulded onto the edge section (22) of the separating wall (17).

4. Separating means according to Claim 2 or 3,
**characterized in that**
the lip seal (25) is adhesively bonded to the rectilinear edge section (22) of the separating wall (17) .

5. Separating means according to one of Claims 2 to 4,
**characterized in that**
the lip seal (25) is connected to the separating wall (17) in an interlocking manner.

6. Deflection mirror arrangement (1) for a laser scanner (2) comprising a mirror support (14) which can be rotationally driven about a rotation axis (13) and supports at least one deflection mirror (15, 16), and comprising a separating means (21), which is held on the mirror support (14), comprising a substantially rigid separating wall (17) which lies perpendicular to the rotation axis (13) and engages over the deflection mirror (15, 16) by way of a rectilinear edge section (22) and separates a receiving mirror region (19) from a transmitting mirror region (18), wherein the separating means (21) is fastened to the mirror support (14),
**characterized in that**
the separating means (21) bears against the deflection mirror (15, 16) by means of an elastically deformable seal element (25) which is arranged on the separating wall (17) along the rectilinear edge section (22).

7. Deflection mirror arrangement according to Claim 6,
**characterized in that**
the deflection mirror arrangement (1) comprises two deflection mirrors (15, 16) which are arranged at a radial distance from the rotation axis (13) on opposite sides of the mirror support (14).

8. Laser scanner comprising a deflection mirror arrangement (1) according to Claim 6 or 7 and a separating means (21) for the said deflection mirror arrangement according to one of Claims 1 to 5.

## Revendications

1. Moyen de séparation (21) optique pour un arrangement de miroirs de déviation (1) d'un système de balayage à laser (2), comprenant une paroi de séparation sensiblement rigide destinée à séparer une zone de miroir de réception (19) d'un miroir de déviation (15, 16) d'une zone de miroir d'émission (18), la paroi de séparation (17) possédant une portion d'arête (22) rectiligne et le moyen de séparation (21) des barrettes de fixation (23) disposées des deux côtés de la portion d'arête (22), **caractérisé en ce que**
un élément d'étanchéité (25) déformable élastiquement étant disposé le long de la portion d'arête (22), le moyen de séparation étant configuré de telle sorte qu'il repose contre le miroir de déviation par le biais de l'élément d'étanchéité déformable élastiquement.

2. Moyen de séparation selon la revendication 1, **caractérisé en ce que** l'élément d'étanchéité est réalisé sous la forme d'une garniture d'étanchéité à lèvre (25) et possède une section transversale avec une portion de fixation (26) fixée à la paroi de séparation (17) et une lèvre de recouvrement (27) pliable élastiquement qui fait saillie hors de la portion de fixation (26).

3. Moyen de séparation selon la revendication 2, **caractérisé en ce que** la garniture d'étanchéité à lèvre (25) est surmoulée sur la portion d'arête (22) de la paroi de séparation (17).

4. Moyen de séparation selon la revendication 2 ou 3, **caractérisé en ce que** la garniture d'étanchéité à lèvre (25) est collée avec la portion d'arête (22) rectiligne de la paroi de séparation (17).

5. Moyen de séparation selon l'une des revendications 2 à 4, **caractérisé en ce que** la garniture d'étanchéité à lèvre (25) est reliée par complémentarité de formes à la paroi de séparation (17).

6. Arrangement de miroirs de déviation (1) pour un système de balayage à laser (2), comprenant un porte-miroir (14) qui peut être entraîné en rotation autour d'un axe de rotation (13), lequel porte au moins un miroir de déviation (15, 16), et comprenant un moyen de séparation (21) maintenu au niveau du porte-miroir (14), comprenant une paroi de séparation (17) sensiblement rigide qui est perpendiculaire à l'axe de rotation (13) et qui enveloppe le miroir de déviation (15, 16) avec une portion d'arête (22) rectiligne et sépare une zone de miroir de réception (19) d'une zone de miroir d'émission (18), le moyen de séparation (21) étant fixé au porte-miroir (14), **caractérisé en ce que** le moyen de séparation (21) repose contre le miroir de déviation (15, 16) par le biais d'un élément d'étanchéité (25) déformable élastiquement, lequel est disposé le long de la portion d'arête (22) rectiligne au niveau de la paroi de séparation (17).

7. Arrangement de miroirs de déviation selon la revendication 6, **caractérisé en ce que** l'arrangement de miroirs de déviation (1) comporte deux miroirs de déviation (15, 16) qui sont disposés sur des côtés opposés du porte-miroir (14) en étant espacés de l'axe de rotation (13) dans le sens radial.

8. Système de balayage à laser comprenant un arrangement de miroirs de déviation (1) selon la revendication 6 ou 7 et un moyen de séparation pour celui-ci selon l'une des revendications 1 à 5.
